# EUROPEAN PATENT APPLICATION

(11) **EP 3 190 486 A1**
(43) Date of publication of application: **12.07.2017**
(21) Application number: 15837309.2
(22) Date of filing: 02.09.2015
(51) Int. Cl.: G06F 3/041, B43L 1/10

(54) **TOUCH BLACKBOARD, TOUCH BLACKBOARD FRAME, TOUCH ALL-IN-ONE MACHINE AND COMBINED BLACKBOARD**

(30) Priority: 03.09.2014 CN 201420503554 U; 12.09.2014 CN 201420522490 U; 15.04.2015 CN 201520227055 U; 19.08.2015 CN 201520627603 U
(71) Applicant: UC Nano Technologies Co., Ltd., Suzhou, Jiangsu 215123 (CN)
(72) Inventor: LIU, Zejiang, Suzhou Jiangsu 215123 (CN)
(74) Representative: Noble, Nicholas
(86) International application number: PCT/CN2015/088851
(87) International publication number: WO 2016/034129

(57) **Abstract**

A touch blackboard comprises at least one glass blackboard (21), at least one touch film and at least one display unit (22); the touch film is affixed to the glass blackboard (21) for the back of a writing side, and the display unit (22) is placed at the back of the touch film. The touch blackboard not only has the functions of common glass blackboards, but is also additionly endowed with a touch display function, so as to realize man-machine interaction at the same time of displaying multimedia information. In addition, also provided are a touchboard frame, a touch all-in-one machine and a combined blackboard.

## Description

### FIELD

The present disclosure relates generally to the field of man-machine interaction, and more particularly, to a touch blackboard based on a nanometer touch film, a touch blackboard frame, a touch all-in-one machine and a combined blackboard.

### BACKGROUND

A blackboard in a classroom may be the most frequently used teaching tool by a teacher. The blackboard has long been a single glass board or cement wall which is available for writing. Along with the spread of multimedia teaching in recent years, many schools have their multi-media classrooms, in which the teacher can teach students by means of PowerPoint (PPT). In some well-equipped schools, an electronic whiteboard is even used for teaching or interaction. However, the projection screen fabric for the multimedia teaching is unable to be written, so that it is very inconvenient for the teacher to write something to be shown when using the multimedia teaching equipment, in which case the projection screen fabric tends to be packed up, or the teacher should only write on the blackboard on either side of the projection screen fabric. Moreover, in addition to a projector and a projection screen fabric, a control device for the projector should also be installed in the classroom. These devices in the classroom may be easily damaged by naughty students, resulted in increase in maintenance costs.

At present, in areas of a relatively developed economy, a whiteboard with an infrared touch function is used to replace common blackboards in some schools. Such whiteboard can not only use a whiteboard marker for writing, but also realize a function of multimedia teaching. However, for this whiteboard with the infrared touch function, it has a protruding frame on which a chalk is unable to write, and its touch function is easy to fail during washing, to cause the touch to be insensitive or to fail, with poor experience.

A patent application No. CN201520042697.9, named "WRITABLE TOUCH BLACKBOARD", filed by the applicant, discloses a blackboard technology, including a glass blackboard adapted to be written, with good light transmission, and an intelligent touch device. The intelligent touch device includes a touch display, a control module, a computing and displaying unit for a power supply module and other modules, and a supporting housing. This kind of interactive intelligent blackboard combines the benefits of convenience in writing of the common blackboards and the benefits of the interactive intelligent all-in-one machine. As a result, it is more convenient and freely for marking by writing in various communications with children or in work, and it can not only be written with chalk, but also show multimedia presentations. In addition, it is light to be moved easily, to increase the arbitrariness of usage scenarios. Because such blackboard is positioned to be used at home or in a meeting-room, a common design is used for the strength and configuration of its supporting housing. The present disclosure is directed to a blackboard with a large size and a heavy weight, in which the strength and configuration of the supporting housing are designed to satisfy the firmness and security when hanging on a wall.

In addition, the applicant has already filed a patent application named "TOUCH INTEGRATED DEVICE", which disclose a touch integrated device which is intelligent and can be conveniently installed in various applications. The touch integrated device integrates a touch unit, an imaging display unit, a calculation control unit and a corresponding anti-interference unit into an integrated product, which is very suitable to be used in public places or some interacting places, and also office places, or other places for presenting electronic documents and multi-person interactive communications. In some office places, the presenter may raise a new requirement for writing characters on the display screen with a sign pen or chalk directly, to facilitate communication and exchange. However, the housing protective glass of the touch integrated device is a common glass which is very smooth, so it is not suitable for writing presentation.

There is also a blackboard technology on the market at present, which is a device based on a liquid crystal display panel adapted for writing, and provides a writable intelligent paper without ink, to replace traditional blackboards and chalks made of non-green materials, to realize a completely electronic mode. However, for a person accustomed to write with chalk for many years, it is sometimes more accustomed and convenient to chalk. Further, such technology has a disadvantage in that it must erase the whole blackboard when a certain area of the blackboard is required to be erased, and it cannot achieve multimedia playing and writing storage.

### SUMMARY

Based on the above, an objective of the present disclosure is to provide a touch blackboard based on a nanometer touch film, a touch blackboard frame, a touch all-in-one machine and a combined blackboard, to overcome the defects in the prior art.

According to one aspect of the present disclosure, a touch blackboard is provided, including at least one glass blackboard, at least one touch film, and at least one display unit, wherein the touch film is affixed to the glass blackboard on a back of a writing side of the glass blackboard, and the display unit is placed on a back of the touch film.

Further, the touch film is affixed at a central position of the glass blackboard.

Further, the glass blackboard is made of an organic glass selected from a group of matte glass board, ultra clear glass board and nanometer glass.

Further, the glass blackboard is a mimesis glass.

Further, the glass blackboard is adapted to be written with a whiteboard marker or a chalk thereon.

Further, the glass blackboard includes a touch area configured to be touched by a finger directly or a stylus to implement touch control.

Further, various communication interfaces for communication connection with the display unit are mounted on a lower part of the glass blackboard.

Further, a wireless adapter, a wireless communication interface and a USB interface ate mounted on the display unit.

The touch blackboard according to the present disclosure is convenient for a teacher to write and conduct electronic teaching, which can conveniently realize interactive teaching with students. Moreover, the touch blackboard has the advantages of both the common blackboard and the multi-media classroom, and it is cost saving and convenient for maintenance.

According to another aspect of the present disclosure, a blackboard frame for a touch blackboard is provided, including a display device and a glass blackboard, wherein the blackboard frame is made up of concave shape alloy frames, and a raised retaining strip is arranged at bottom of the concave shape alloy frame for retaining the glass blackboard.

Further, the display device is fastened to an upper beam and a lower beam of the blackboard frame through a left metal plate rack and a right metal plate rack, and the metal plate rack is provided with at least one threaded hole.

Further, a bent corner is arranged on either side of the metal plate rack, and the corner is provided with at least one threaded hole for securing the display device.

Further, the blackboard frame is made of an aluminum alloy material.

Further, the raised retaining strip at bottom of the concave shape alloy frame of the blackboard frame and the glass blackboard are on a same plane.

Further, the blackboard frame is fitted into a concave shape groove of the blackboard frame through an L shape hook.

The blackboard frame according the present disclosure is simple in structure, strong in mechanical strength, and convenient in installation, and is firm and secure, so it is suitable for applications of wall-mounted touch blackboards in classrooms or large meeting rooms.

According to a further aspect of the present disclosure, a touch all-in-one machine is provided, including a front housing, a host unit, a display unit, a touch sensing unit, and a back housing, wherein the front housing is made up of an outer frame and a glass blackboard embedded in the outer frame.

Further, the outer frame and the glass blackboard are on a same plane.

Further, the glass blackboard is an organic glass selected from a group of matte glass board, ultra clear glass board and nanometer glass.

Further, the glass blackboard is adapted to be written with a whiteboard marker or a chalk thereon.

Further, the glass blackboard has a light transmittance larger than 90%.

Further, the glass blackboard has a thickness of 1 mm - 25mm.

Further, the glass blackboard includes a touch area configured to be touched by a finger directly or a stylus to implement touch control.

The above touch all-in-one machine can either be used as a common touch all-in-one computer, or be used as a whiteboard, to allow a user to write or mark when showing a document or communicating, which is more suitable to usage habits of the user to bring a better experience to the user.

According to yet a further aspect of the present disclosure, a combined blackboard is provided, including a blackboard having at least two writable areas, wherein the combined blackboard is made up of the above touch blackboard, and a liquid crystal handwriting blackboard and/or glass blackboard, and the combined blackboard is on a same plane.

Further, the combined blackboard includes an unmovable touch blackboard in the middle, and two splicable glass blackboards on left and right sides respectively.

Further, the touch blackboard includes the above touch all-in-one machine.

Further, the glass blackboard is made up of a blackboard frame and an anti-glare glass blackboard.

Further, the glass blackboard of the touch blackboard is an anti-glare glass that is writable with chalk.

Further, the liquid crystal handwriting blackboard is a cholesteric liquid crystal handwriting device that is configured to create handwriting through finger force, and erase the handwriting through an erasing button.

Further, the liquid crystal handwriting blackboard has a liquid crystal device including a bistable liquid crystal display device.

Further, the liquid crystal handwriting blackboard is covered with a transparent flexible material and a touch film, the transparent flexible material is between the liquid crystal handwriting blackboard and the touch film, the touch film is coupled to a computer device including a processor and a memory, the memory is adapted to store instructions, and the instructions are executable to cause the processor to save written records on the touch film.

Further, the computer device includes a communication module adapted to transmit the saved written records to an external device.

Further, the communication module is a Bluetooth module, and the saved written records are wirelessly transmitted to an external device.

Further, a lighting device is arranged in front of the liquid crystal handwriting blackboard, and light from the lighting device make handwriting more clear.

The combined blackboard according to the present disclosure is simple in structure, combines advantages of all the current blackboard techniques, and is suitable for teachers of various different usage habits.

### BRIEF DESCRIPTION OF THE DRAWINGS

FIG. 1 is a structural schematic diagram illustrating a touch blackboard according to First Embodiment of the present disclosure.
FIG. 2 is a structural schematic diagram illustrating a touch blackboard according to Second Embodiment of the present disclosure.
FIG. 3 is a structural schematic diagram illustrating an intelligent blackboard according to Third Embodiment of the present disclosure.
FIG. 4 is a structural schematic diagram illustrating a back of a middle blackboard according to Third Embodiment of the present disclosure.
FIG. 5 is a space diagram illustrating a part of a blackboard frame according to Third Embodiment of the present disclosure.
FIG. 6 is a cross-section diagram illustrating a part of the blackboard frame according to Third Embodiment of the present disclosure.
FIG. 7 is a front view illustrating a metal plate rack according to Third Embodiment of the present disclosure.
FIG. 8 is a left view illustrating a metal plate rack according to Third Embodiment of the present disclosure.
FIG. 9 is a front view illustrating a hook for securing the blackboard according to Third Embodiment of the present disclosure.
FIG. 10 is exploded view illustrating a main structure of a touch whiteboard all-in-one machine according to Fourth Embodiment of the present disclosure.
FIG. 11 is a structural schematic diagram illustrating a combined blackboard according to Fifth Embodiment of the present disclosure.
FIG. 12 is a structural schematic diagram illustrating a combined blackboard according to Fifth Embodiment of the present disclosure.
FIG. 13 is a structural schematic diagram illustrating a combined blackboard according to Fifth Embodiment of the present disclosure.
FIG. 14 is a structural schematic diagram illustrating a combined blackboard according to Fifth Embodiment of the present disclosure.

### DETAILED DESCRIPTION OF THE PREFERRED EMBODIMENTS

In the following description of embodiments, reference is made to the accompanying drawings which form a part hereof, and in which it is shown by way of illustration specific embodiments of the disclosure that can be practiced. It is to be understood that other embodiments can be used and structural changes can be made without departing from the scope of the disclosed embodiments.

### First Embodiment

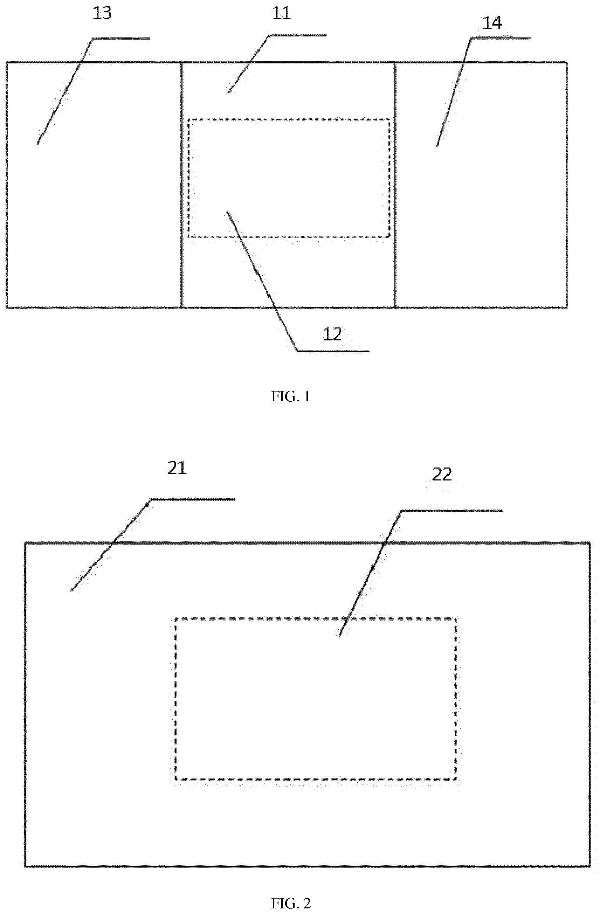

A touch blackboard is provided. As shown in FIG. 1. The touch blackboard includes a display unit 12, a middle unmovable blackboard 11, a touch film affixed on a back of a writing side of a glass blackboard, and two side splicable blackboards 13, 14. The splicable blackboards 13, 14 and the middle unmovable blackboard 11 are on a same plane. The touch film is affixed on a back of a writing side of the middle unmovable blackboard 11, and the display unit 12 is mounted on the back of the touch film. The display unit 12 has a less area than the middle unmovable blackboard 11, and is placed at a central position of the back of the middle unmovable blackboard 11. The touch film features the capability to achieve floating touch, or touch even through a nonmetallic object. The middle unmovable blackboard is made of a glass blackboard. The glass blackboard is an organic glass selected from a group of matte glass board, ultra clear glass board and nanometer glass. The glass blackboard is a glass material with a thickness that may be controlled within 5 mm - 20 mm, and light transmittance larger than 80%. When the display unit 12 is turned on, a teacher can operate on the display unit with a finger or stylus through the middle unmovable blackboard 11. The glass blackboard may be a mimesis glass that when there is no touch-based input, the display may enter the hibernate mode, and the whole blackboard may look like a common glass blackboard; and when the display is required to be operated, it only needs a finger to touch the touch area lightly that the display restores to its displaying status. When the touch blackboard 12 is turned off, the teacher can write on the surface of the glass blackboard directly with a chalk or whiteboard marker. A lower part of the middle unmovable blackboard 11 is provided with various communication interfaces for communication connection with the display unit, including a network interface, USB interface and other common communication interfaces. The host of the display unit 12 is mounted with a wireless adapter, a wireless communication interface and a USB interface. The teacher can use a mobile device in his/her hand to transmit courseware to the display unit 12 via line or wireless way through these communication interfaces, for displaying. In this way, it facilitates realization of various communication connections, and usage of electronic documents and network resources.

### Second Embodiment

As shown in FIG. 2, a touch blackboard includes a glass blackboard 21, a touch film affixed to the glass blackboard on a back of a writing side of the glass blackboard 21, and a display unit 22. In this embodiment, the glass blackboard adopts an integral structure to make the whole blackboard look one integrated mass, like a common glass blackboard, but it can realize functions of electronic whiteboard, multimedia playing, and interactive exhibition etc.

This touch blackboard not only has the function of the common blackboard, but also integrates the function of multimedia teaching, so it can completely replace the multimedia teaching mode made up of a projection system, and it is easier to operate and achieve interactive exhibition with students. In addition, this touch blackboard saves resources and reduces maintenance costs.

### Third Embodiment

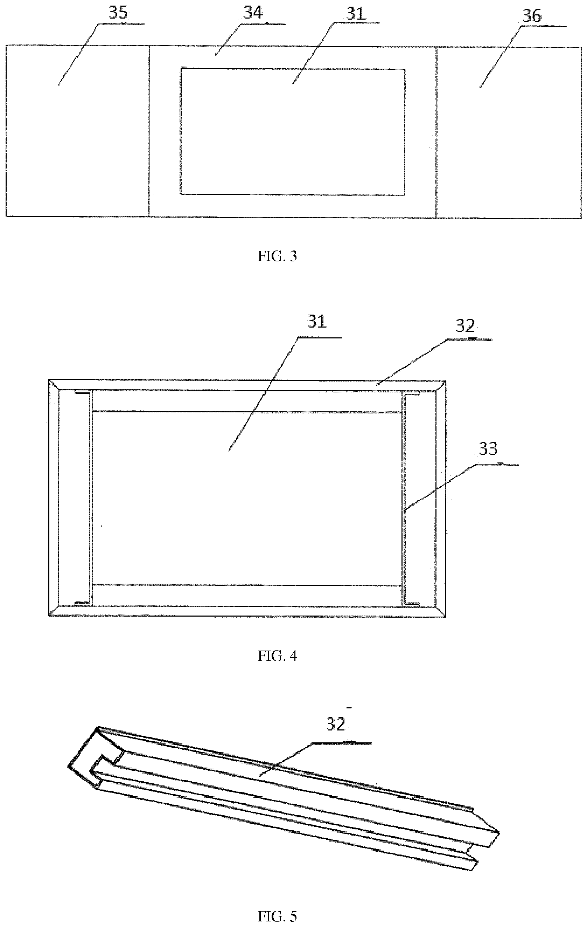

As shown in FIG. 3, it is a front view illustrating an intelligent blackboard according to this embodiment of the present disclosure. The intelligent blackboard includes a middle blackboard 34, and a left blackboard 35 and a right blackboard 36 on two sides of the middle blackboard 34 respectively. An intelligent display device 31 is mounted inside the glass blackboard of the middle blackboard 34.

As shown in FIG.4, it is a structural schematic diagram illustrating a back of the middle blackboard 34 according to this embodiment of the present disclosure. The blackboard frame 32 is rectangular, and two metal plate racks 33 are arranged on left and right sides inside the blackboard frame 32 respectively. The intelligent display device 31 is fastened to an upper beam and a lower beam of the blackboard frame 32 through the left and right metal plate racks 33, and the metal plate rack is provided with threaded holes for securing.

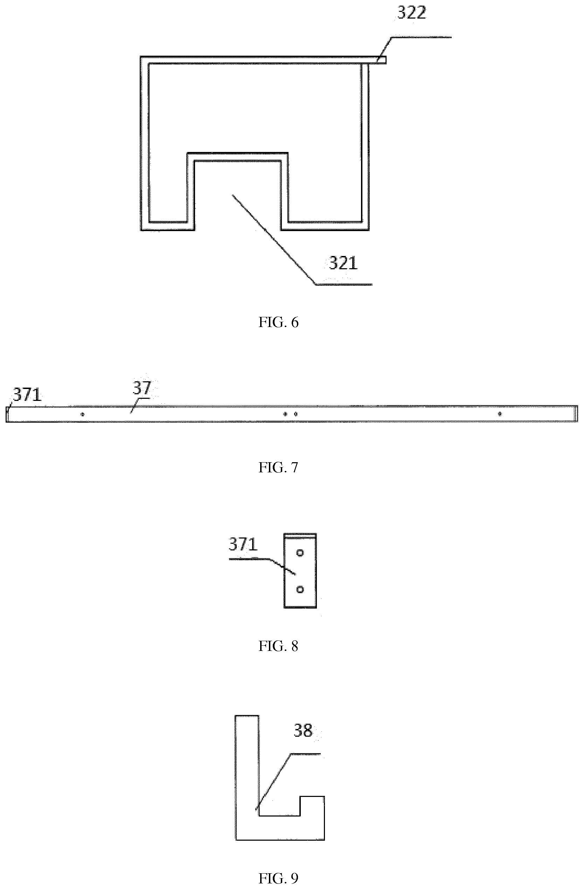

FIGS. 5 and 6 are space diagram and cross-section diagram illustrating a part of the blackboard frame according to this embodiment respectively. As shown, the frame member is a concave shape alloy material, and a raised retaining strip 322 is arranged at bottom of the concave shape alloy frame for placing and retaining the glass blackboard. The raised retaining strip 322 and the glass blackboard are on a same plane. The blackboard frame may be made of an aluminum alloy material with a stable structure and low cost. Alternatively, the blackboard frame may be made of stainless steel or other alloy materials.

FIGS. 7 and 8 are front view and left view illustrating a metal plate rack according to this embodiment respectively. A bent corner is arranged on either side of the metal plate rack 33, and the corner is provided with at least one threaded hole for securing the intelligent display device.

FIG. 9 is a front view illustrating a hook for securing the blackboard. The hook 38 is L shaped, provided with a threaded hole in its long side, and a raised part on its short side. The threaded hole is used to fasten the hook to the wall. The raised part matches the groove 321 of the concave shape alloy frame. In this way, the hook is easy to install, and can be fixed on the wall firmly and securely, by means of the structure of the concave shape alloy frame. Such hook is simple in structure and convenient in installation and maintenance.

The intelligence blackboard for classroom or large meeting room is preferably made up of three blackboards. One intelligence blackboard at middle has a larger area, and the intelligent display device is arranged on the back of the middle blackboard. Two smaller blackboards are arranged on two sides. This composite structure facilitates installation, transportation and flexibility of configuration.

### Fourth Embodiment

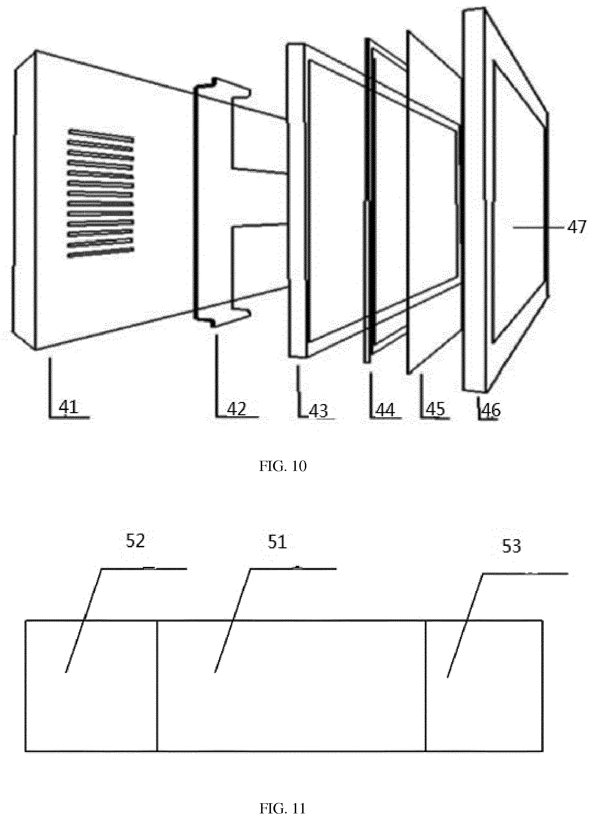

As shown in FIG. 10, a touch whiteboard all-in-one machine may include a front housing 46, a host unit, a display unit 43, a touch sensing unit 45, and a back housing 41, wherein the front housing is made up of an outer frame and a glass blackboard 47 embedded in the outer frame. The outer frame and the glass blackboard are on a same plane. Alternatively, the housing may be made up of an outer frame formed by an infrared touch sensing module and a glass blackboard embedded in the outer frame, and the glass blackboard is concave in the outer frame. The glass blackboard 47 is an organic glass selected from a group of matte glass board, ultra clear glass board and nanometer glass, of a thickness of 1 mm - 23 mm and a light transmittance larger than 90%, with good features of wear-resistant and impact-resistance. The glass blackboard 47 is writable with a whiteboard marker or a chalk. In addition, the glass is easy to clean. The touch sensing unit 45 affixed on the display unit 43 is on the back of the glass blackboard 47. In this way, the user can operate the all-in-one machine by touch through the glass blackboard 47. The touch area can be touched by a finger directly or a stylus to implement touch control.

The touch whiteboard all-in-one machine according to the present disclosure can either be used as a common touch all-in-one computer, or be used as a whiteboard, to allow a user to write or mark when showing a document or communicating, which is more suitable to usage habits of the user to bring a better experience to the user.

### Fifth Embodiment

As shown in FIG. 11, it is a front view illustrating a combined blackboard according to Fifth Embodiment of the present disclosure. The combined blackboard includes a touch blackboard 51 at a middle position, a liquid crystal handwriting blackboard 53 on the right side of the touch blackboard 51, and a glass blackboard 52 on the left side of the touch blackboard 51.

The touch blackboard 51 includes a glass blackboard mounted inside the blackboard frame and a touch all-in-one machine arranged on the back of the glass blackboard, and adapted for chalking and handwriting input, and playing multimedia materials. The liquid crystal handwriting blackboard 53 is a cholesteric liquid crystal handwriting device that creates handwriting through finger force, and erases the handwriting through an erasing button, which is suitable for handwriting and convenient for erasing. The glass blackboard 52 is made up of a blackboard frame and an anti-glare glass blackboard, and adapted for chalking.

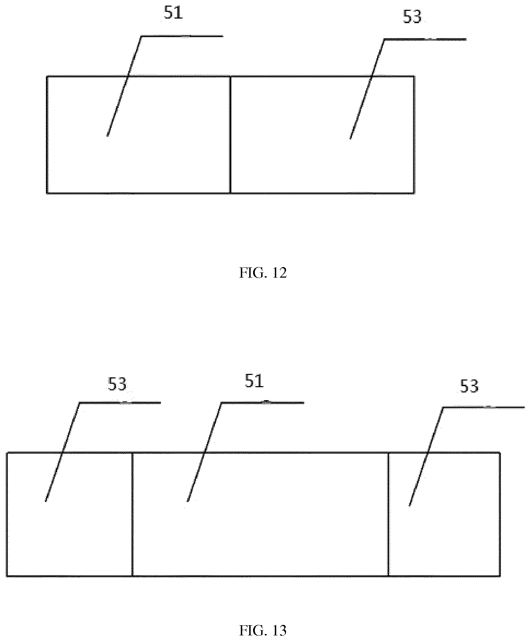

As shown in FIG. 12, it is a front view illustrating a combined blackboard according to a modified example of Fifth Embodiment of the present disclosure. The touch blackboard 51 is on the left side, and the liquid crystal handwriting blackboard 53 is on the right side.

As shown in FIG. 13, it is a front view illustrating a combined blackboard according to another modified example of Fifth Embodiment of the present disclosure. The touch blackboard 51 is at the middle position, two same liquid crystal handwriting blackboards 53 are on the two sides of the touch blackboard 51.

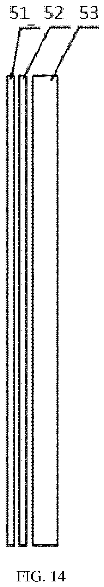

As shown in FIG. 14, it is a front view illustrating a combined blackboard according to a further modified example of Fifth Embodiment of the present disclosure. The liquid crystal handwriting blackboard 53 is covered with a transparent flexible material 52 and a touch film 51, the transparent flexible material 52 is between the liquid crystal handwriting blackboard 53 and the touch film 51, and the touch film 51 is coupled to a computer device (not shown) including a processor and a memory. The memory is adapted to store instructions, and the instructions are executable to cause the processor to save written records on the touch film. The communication module may be a Bluetooth module, and the saved written records may be wirelessly transmitted to an external device.

The above are preferred embodiments of the disclosure described in detail, and should not be deemed as limitations to the scope of the present disclosure. It should be noted that variations and improvements will become apparent to those skilled in the art to which the present disclosure pertains without departing from its spirit and scope. Therefore, the scope of the present disclosure is defined by the appended claims.

## Claims

1. A touch blackboard, comprising at least one glass blackboard, at least one touch film, and at least one display unit, wherein the touch film is affixed to the glass blackboard on a back of a writing side of the glass blackboard, and the display unit is placed on a back of the touch film.

2. The touch blackboard of claim 1, wherein the touch film is affixed at a central position of the glass blackboard.

3. The touch blackboard of claim 1, wherein the glass blackboard is made of an organic glass selected from a group of matte glass board, ultra clear glass board and nanometer glass.

4. The touch blackboard of claim 1, wherein the glass blackboard is a mimesis glass.

5. The touch blackboard of claim 1, wherein the glass blackboard is adapted to be written with a whiteboard marker or a chalk thereon.

6. The touch blackboard of claim 1, wherein the glass blackboard includes a touch area configured to be touched by a finger directly or a stylus to implement touch control.

7. The touch blackboard of claim 1, wherein various communication interfaces for communication connection with the display unit are mounted on a lower part of the glass blackboard.

8. The touch blackboard of claim 1, wherein a wireless adapter, a wireless communication interface and a USB interface ate mounted on the display unit.

9. A blackboard frame for a touch blackboard, comprising a display device and a glass blackboard, wherein the blackboard frame is made up of concave shape alloy frames, and a raised retaining strip is arranged at bottom of the concave shape alloy frame for retaining the glass blackboard.

10. The blackboard frame of claim 9, wherein the display device is fastened to an upper beam and a lower beam of the blackboard frame through a left metal plate rack and a right metal plate rack, and the metal plate rack is provided with at least one threaded hole.

11. The blackboard frame of claim 10, wherein a bent corner is arranged on either side of the metal plate rack, and the corner is provided with at least one threaded hole for securing the display device.

12. The blackboard frame of claim 9, wherein the blackboard frame is made of an aluminum alloy material.

13. The blackboard frame of claim 9, wherein the raised retaining strip at bottom of the concave shape alloy frame of the blackboard frame and the glass blackboard are on a same plane.

14. The blackboard frame of claim 9, wherein the blackboard frame is fitted into a concave shape groove of the blackboard frame through an L shape hook.

15. A touch all-in-one machine, comprising a front housing, a host unit, a display unit, a touch sensing unit, and a back housing, wherein the front housing is made up of an outer frame and a glass blackboard embedded in the outer frame.

16. The touch all-in-one machine of claim 15, wherein the outer frame and the glass blackboard are on a same plane.

17. The touch all-in-one machine of claim 15, wherein the glass blackboard is an organic glass selected from a group of matte glass board, ultra clear glass board and nanometer glass.

18. The touch all-in-one machine of claim 15, wherein the glass blackboard is adapted to be written with a whiteboard marker or a chalk thereon.

19. The touch all-in-one machine of claim 15, wherein the glass blackboard has a light transmittance higher than 90%.

20. The touch all-in-one machine of claim 17, wherein the glass blackboard has a thickness of 1 mm - 25mm.

21. The touch all-in-one machine of claim 15, wherein the glass blackboard includes a touch area configured to be touched by a finger directly or a stylus to implement touch control.

22. A combined blackboard, comprising a blackboard having at least two writable areas, wherein the combined blackboard is made up of the touch blackboard of any one of claims 1 to 8, and a liquid crystal handwriting blackboard and/or glass blackboard, and the combined blackboard is on a same plane.

23. The combined blackboard of claim 22, further comprising an unmovable touch blackboard in the middle, and two splicable glass blackboards on left and right sides respectively.

24. The combined blackboard of claim 22, wherein the touch blackboard includes the all-in-one machine of claim 17.

25. The combined blackboard of claim 22, wherein the glass blackboard is made up of a blackboard frame and an anti-glare glass blackboard.

26. The combined blackboard of claim 22, wherein the glass blackboard of the touch blackboard is an anti-glare glass that is writable with chalk.

27. The combined blackboard of claim 22, wherein the liquid crystal handwriting blackboard is a cholesteric liquid crystal handwriting device that is configured to create handwriting through finger force, and erase the handwriting through an erasing button.

28. The combined blackboard of claim 27, wherein the liquid crystal handwriting blackboard has a liquid crystal device including a bistable liquid crystal display device.

29. The combined blackboard of claim 22, wherein the liquid crystal handwriting blackboard is covered with a transparent flexible material and a touch film, the transparent flexible material is between the liquid crystal handwriting blackboard and the touch film, the touch film is coupled to a computer device including a processor and a memory, the memory is adapted to store instructions, and the instructions are executable to cause the processor to save written records on the touch film.

30. The combined blackboard of claim 29, wherein the computer device includes a communication module adapted to transmit the saved written records to an external device.

31. The combined blackboard of claim 30, wherein communication module is a Bluetooth module, and the saved written records are wirelessly transmitted to an external device.

32. The combined blackboard of claim 22, wherein a lighting device is arranged in front of the liquid crystal handwriting blackboard.
